(19) Europäisches Patentamt
European Patent Office
Office européen des brevets

(11) EP 2 935 146 B1

(12) FASCICULE DE BREVET EUROPEEN

(45) Date de publication et mention
de la délivrance du brevet:
17.08.2016 Bulletin 2016/33

(51) Int Cl.:
*C04B 28/04* (2006.01)   *C04B 28/06* (2006.01)
*C04B 28/16* (2006.01)   *C04B 111/70* (2006.01)
*C04B 111/76* (2006.01)   *C04B 7/32* (2006.01)

(21) Numéro de dépôt: 13824609.5

(22) Date de dépôt: 16.12.2013

(86) Numéro de dépôt international:
PCT/FR2013/053085

(87) Numéro de publication internationale:
WO 2014/096649 (26.06.2014 Gazette 2014/26)

(54) **MATERIAU CIMENTAIRE DURCISSABLE A BASE DE LIANTS HYDRAULIQUES POUR UNE MISE EN OEUVRE A BASSES TEMPERATURES**

HÄRTBARES ZEMENTMATERIAL AUF BASIS EINES HYDRAULISCHEN BINDEMITTELS ZUR VERWENDUNG BEI NIEDRIGEN TEMPERATUREN

CURABLE HYDRAULIC BINDER-BASED CEMENT MATERIAL INTENDED TO BE USED AT LOW TEMPERATURES

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 18.12.2012 FR 1262226

(43) Date de publication de la demande:
28.10.2015 Bulletin 2015/44

(73) Titulaire: Ciments Français
92800 Puteaux (FR)

(72) Inventeur: GRELAUD, Jean-Pierre
F-78520 Saint Martin La Garenne (FR)

(74) Mandataire: Le Cloirec, Claudine et al
Ipsilon
3, rue Edouard Nignon
44300 Nantes (FR)

(56) Documents cités:
EP-A1- 0 211 194      EP-A1- 0 657 398
WO-A1-02/098815      WO-A2-2010/109116
DE-A1- 4 213 401      DE-A1- 19 501 100
FR-A1- 2 671 342

• DATABASE WPI Week 200849 Thomson
Scientific, London, GB; AN 2008-H67536
XP002712395, -& JP 2008 162837 A (UBE IND LTD)
17 juillet 2008 (2008-07-17)

**Description**

La présente invention a pour objet des matériaux cimentaires durcissables pouvant faire prise à des températures basses, tout en offrant des performances mécaniques satisfaisantes à court et long termes. La présente invention a également pour objet l'utilisation de ces matériaux cimentaires durcissables dans une mise en oeuvre à des températures basses.

La mise en oeuvre d'un liant hydraulique dans des matériaux cimentaires durcissables tels que des enduits, coulis, pâtes de ciment, mortiers ou bétons en conditions hivernales, en altitude, ou au sein de pays habituellement très froids est problématique. Les basses températures (-10°C à +5°C) allongent considérablement les temps de prise et pénalisent les résistances à court terme, ces résistances à 1 jours sont typiquement faibles (de l'ordre de 1 à quelques MPa). Par contre les résistances à long terme (28 jours) ne sont pas affectées par le froid, elles restent similaires à celles des enduits, coulis, pâtes de ciment, mortiers ou bétons coulés à des températures usuelles (+20°C).

Cette contrainte sur la résistance à court terme des bétons et mortiers présente un handicap pour l'industrie de la construction. Les chantiers sont contraints de s'arrêter lorsque les températures extérieures passent sous un certain seuil. Les bétons et mortiers coulés ne développent pas des résistances suffisantes pour être exploitables, le décoffrage est dangereux voire impossible. Les structures obtenues ne peuvent supporter les contraintes exercées par la masse des coulages suivants, et les rotations journalières habituelles pour décoffrages ne sont pas envisageables. En résumé, les chantiers de construction s'arrêtent lorsque la température extérieure chute pour s'approcher de 0°C.

Il est donc souhaitable de disposer de matériaux cimentaires durcissables permettant de développer des résistances satisfaisantes à court terme par temps froid (typiquement -10°C à +5°C), tout en conservant des résistances mécaniques à long terme comparables aux matériaux cimentaire durcissables à base de ciment Portland coulés à des températures plus classiques (+20°C).

L'homme du métier connait la combinaison de ciment Portland et de ciment de type sulfoalumineux (par exemple : EP0353062, EP0439372, WO2002/098622, WO2002/098815). Ces combinaisons sont réputées développer rapidement de fortes résistances mécaniques.

La mise en oeuvre de ciments de type sulfoalumineux est délicate en raison de la possibilité de formation d'espèces minérales indésirables après la prise de la matrice cimentaire, notamment la formation d'ettringite dite différée. Ces cristaux expansifs peuvent provoquer la rupture de la matrice cimentaire, et les résistances mécaniques à long terme de l'ouvrage peuvent être compromises. De plus, les ciments de type sulfoalumineux ont des temps de prise souvent très courts, de l'ordre de quelques minutes, ce qui ne permet pas une mise en oeuvre aisée du produit.

L'homme du métier est donc confronté à une double contrainte : proposer un matériau cimentaire durcissable offrant de bonnes propriétés mécaniques à court terme lorsqu'il est mis en oeuvre à basse température, sans toutefois pénaliser exagérément les temps de prise, la durée d'ouvrabilité et les résistances à long terme.

Un but de la présente invention est de proposer un matériau cimentaire durcissable permettant d'obtenir des résistances à court et long termes comparables à celles des matériaux durcissables à base de ciments Portland appliqués ou coulés à environ +20°C.

Un autre but de la présente invention est de proposer un matériau cimentaire durcissable pouvant être mis en oeuvre à basses températures, et permettant d'obtenir des résistances à court et long termes satisfaisantes pour l'homme du métier.

La présente invention permet de répondre à ces contraintes grâce à un Matériau cimentaire durcissable en présence d'eau comprenant une composition de liants hydrauliques renfermant un mélange de liants hydrauliques et un mélange de sources de sulfates,
caractérisé en ce que ledit mélange de liants hydrauliques comprend

- au moins un liant hydraulique contenant une phase minéralogique de type Alite, et
- au moins un liant hydraulique contenant une phase minéralogique de type aluminate, majoritairement constitué de Yeelimite C4A3$ ou d'un mélange de Yeelimite et de mono-aluminate de calcium CA

ledit mélange de sources de sulfates comprenant

- au moins une source de sulfates ayant une solubilité inférieure à 4 g.L$^{-1}$, et
- au moins une source de sulfates ayant une solubilité supérieure à 4 g.L$^{-1}$,

ledit matériau cimentaire comprenant en plus de ladite composition de liants hydrauliques, éventuellement des additions minérales, éventuellement des granulats fins, éventuellement de gros granulats, et éventuellement des adjuvants.

Dans la présente invention, sauf mention contraire, toutes les solubilités sont considérées à une température de 0°C, dans de l'eau pure, et sont exprimées en g.L$^{-1}$.

La présence d'au moins une source de sulfates ayant une solubilité supérieure à 4 g.L$^{-1}$ est nécessaire pour

pouvoir former rapidement l'ettringite ; celle-ci participe au développement des résistances du matériau à court terme. L'ettringite est formée à partir des phases aluminates provenant, à la fois du liant hydraulique contenant une phase minéralogique de type aluminate, et du liant hydraulique contenant une phase minéralogique de type Alite.

La présence d'au moins une source de sulfates ayant une solubilité supérieure à 4 g.L$^{-1}$, permet de s'assurer que l'eau de gâche est initialement très fortement concentrée en sulfates afin qu'il y ait suffisamment d'ions sulfates pour former toute l'ettringite possible en fonction des phases en présence. Il est souhaitable d'éviter la formation de monosulfate hydraté (AFm ou 3C4A\$H12 en notation cimentière). En effet, une carence en sulfates entraine la formation de monosulfate hydraté directement ou par décomposition de l'ettringite. Ce monosulfate hydraté, très instable, n'apporte pas de résistance à la matrice cimentaire. De plus, une exposition à une source de sulfates en solution dans l'eau après l'étape de durcissement, occasionnerait une réaction de formation d'ettringite dite "différée" à partir du monosulfate hydraté. La formation d'ettringite différée s'accompagne d'un gonflement et peut provoquer des expansions, des écaillages, voire même des explosions de structure dangereuses.

La présence d'au moins une source de sulfates ayant une solubilité inférieure à 4 g.L$^{-1}$ permet de s'assurer une libération prolongée de sulfates au sein de la matrice cimentaire tout au long de la maturation. Elle permet notamment de s'assurer que les réactions d'hydratation qui ont lieu sur le long terme ne viennent pas modifier les espèces formées rapidement au début de la prise du matériau cimentaire durcissable (par exemple, une conversion de l'ettringite en monosulfate hydraté).

Ainsi, de manière surprenante, les deux types de sources de sulfates ont chacune un rôle crucial et interviennent à des étapes différentes de la formation des hydrates dans le matériau cimentaire durcissable.

Il a également été observé qu'un matériau cimentaire durcissable mis en oeuvre selon la présente invention présente un phénomène de retrait moins marqué que le même matériau mis en oeuvre avec un liant de type Portland seul. Cet avantage semble être lié à la présence des cristaux expansifs d'ettringite qui compenseraient en partie le retrait. Un tel usage de l'ettringite est connu de l'homme de l'art.

Par "matériau cimentaire durcissable", on désigne tout type de mélange susceptible de développer des résistances mécaniques, notamment des coulis, pâtes de ciment, enduits, mortiers, et béton.

Par "coulis" ou "pâte de ciment", on désigne l'addition d'eau à la composition de liants hydrauliques selon la présente invention. La distinction entre ces deux appellations est liée au rapport massique entre l'eau et le mélange de liants hydrauliques, si le rapport est inférieur à 0,35 le mélange est nommé pâte de ciment, si le rapport est supérieur à 0,35 le mélange est nommé coulis. De manière usuelle les pâtes de ciment sont adjuvantées avec des superplastifiants et éventuellement des modificateurs de rhéologie, et les coulis sont éventuellement adjuvantés avec des superplastifiants et/ou des modificateurs de rhéologie.

Par "superplastifiant", on désigne un composé organique, défloculant, agissant par répulsion électrostatique et/ou par encombrement stérique. A titre d'exemple de superplastifiant on peut citer les polycarboxylates, les mélamines sulfonates, les poly-naphtalènes sulfonates.

Par "modificateur de rhéologie", on désigne un composé organique, permettant d'accroitre la viscosité, la cohésion et le seuil de cisaillement de la matrice cimentaire. Les modificateurs de rhéologie selon la présente invention ont un effet anti ressuage. A titre d'exemple de modificateur de rhéologie on peut citer les polysaccharides modifiés ou non (les gommes diutanes, les gommes xanthane, les gommes gelanes, les gommes welane) et les rétenteurs d'eau (les éthers d'amidons, les éthers de cellulose).

Par "enduit", on désigne un coulis ou une pâte de ciment, auquel sont ajoutés des granulats très fins, c'est-à-dire avec un diamètre compris entre 150 $\mu$m et 1 mm (par exemple des fillers).

Par "mortier", on désigne un coulis ou une pâte de ciment, auquel sont ajoutés des granulats fins c'est-à-dire des granulats dont le diamètre est compris entre 150 $\mu$m et 5 mm (par exemple du sable), et éventuellement des granulats très fins.

Par "béton", on désigne un mortier auquel sont ajoutés des gros granulats, c'est-à-dire des granulats dont le diamètre est supérieur à 5 mm.

Les enduits, mortiers et bétons sont usuellement adjuvantés avec des superplastifiants, et éventuellement des modificateurs de rhéologie.

Les pâtes de ciment, enduits, coulis, mortiers et bétons, et les compositions sèches (c'est-à-dire les enduits, mortiers et béton, avant l'ajout d'eau) nommées "prémix", décrits ci-dessus font partie de l'objet de la présente invention.

Par "liant", on entend un liant hydraulique au sens de la norme EN 197.1, et notamment la définition du paragraphe 4 : matériau minéral finement moulu qui, gâché avec de l'eau forme une pâte qui fait prise et durcit par la suite de réactions et de processus d'hydratations et qui, après durcissement, conserve sa résistance et sa stabilité même sous l'eau.

Le matériau cimentaire durcissable selon la présente invention est également susceptible de contenir en plus de la composition de liants hydrauliques des additions, des adjuvants, des ajouts ou une combinaison de ceux-ci.

Par "filler", on désigne un matériau minéral finement broyé dont 85% des éléments ont un diamètre inférieur à 80 $\mu$m. Les fillers sont notamment utilisés pour optimiser la compacité par remplissage des vides.

Par "addition", on désigne un matériau minéral finement broyé ayant, ou non, un effet pouzzolanique. Le terme "effet pouzzolanique" désigne ici une contribution au développement des résistances mécaniques. Les additions sont en général finement broyées et ont un diamètre inférieur à 400 $\mu$m, notamment inférieur à 150 $\mu$m. Les additions peuvent être broyées séparément des liants hydrauliques, ou co-broyées avec ceux-ci.

Parmi les fillers et additions ayant un effet pouzzolanique on peut citer : les laitiers de haut fourneau, les cendres volantes, les fumées de silice.

Parmi les fillers et additions n'ayant pas d'effet pouzzolaniques on peut citer : les fillers calcaires, les fillers siliceux.

Selon une variante, le matériau cimentaire durcissable comprend en plus de ladite composition de liants hydrauliques, une addition minérale finement broyée choisie parmi : du calcaire, du laitier, des cendres volantes, des fumées de silices, ou une combinaison de plusieurs de ces minéraux.

Ces additions minérales sont définies dans la norme EN 197-1, paragraphe 5.2. Au sens de la présente invention le Clinker Portland est un liant hydraulique contenant une phase minéralogique de type Alite, il n'est donc pas considéré comme une addition minérale.

Couramment, des sulfates de calcium, notamment du gypse ou de l'anhydrite, sont parfois ajoutés au clinker Portland (lors du broyage) pour constituer un liant hydraulique. Ces additions de gypse à hauteur de 3 à 8 % (en pourcentage massique, addition de gypse pur) sont réalisées afin de réguler la prise et notamment d'éviter les phénomènes de prise "flash" du ciment Portland.

Il a été observé que ces additions ne permettent pas d'assurer la totalité des apports en source de sulfates ayant une solubilité inférieure à 4 g.L$^{-1}$, selon la présente invention (voir partie expérimentale).

Par "adjuvant", on désigne une substance au sens de la norme EN 206.1, et notamment la définition du paragraphe 3.1.22 : un produit ajouté au béton durant le processus de mélange, en petites quantités par rapport à la masse de ciment, pour modifier les propriétés du béton frais ou durci.

Par "ajout", on désigne des substances ou des matériaux pouvant être ajoutés aux matériaux durcissables, mais qui ne sont pas des additions, fillers ou adjuvants tels que décrits dans le présent texte. A titre d'exemple d'ajout on peut citer : les fibres servant à renforcer la structure (fibres métalliques, organiques, minérales), les oxydes conférant des propriétés photo-catalytiques ($TiO_2$), les particules lourdes permettant d'isoler des radiations ionisantes (particules de minerais, notamment de Fer), les particules conductrices de l'électricité permettant de blinder des constructions contre les rayonnements électromagnétiques en offrant des cages de Faraday (comme le graphite), des particules conductrices thermiques (métaux), des particules à changements de phase (PCM : "phase change materials") pour stocker l'énergie calorifique dans une structure, ou les particules légères assurant l'isolation thermique et acoustique (particules organiques telles que le polystyrène ou minérales comme la vermiculite, la perlite, les silico-aluminates ou verres fondus et soufflés).

Les phases minéralogiques sont indiquées par leur nom usuel suivi de leur notation cimentière. Les composés primaires sont représentés dans la notation cimentière par les variétés oxydées : C pour CaO, S pour $SiO_2$, A pour $Al_2O_3$, $ pour $SO_3$, H pour $H_2O$ ; cette notation est utilisée dans l'ensemble du présent texte.

Par phase minéralogique de type Alite, on désigne le minéral Alite de formule chimique 3CaO $SiO_2$, ou "C3S" en notation cimentière, et tous ses polymorphes tels que les structures monocliniques (M2, et particulièrement M1 et M3), tricliniques (T1, T2 et T3), et rhomboédrique (R).

Préférentiellement, ledit au moins un liant hydraulique contenant une phase minéralogique de type Alite, est un clinker de type Portland ou un ciment de type Portland.

Par type Portland on désigne tout ciment composé contenant du clinker Portland, notamment les CEM I, II, III, IV et V au sens de la norme EN 197-1, paragraphe 5.2

La présente invention peut être mise en oeuvre avec une combinaison de plusieurs liants hydrauliques contenant chacun une phase minéralogique de type Alite. Toutefois, pour des raisons de simplicité de mise en oeuvre, il est préféré de réaliser la présente invention avec un seul liant hydraulique contenant une phase minéralogique de type Alite.

De préférence, ledit au moins un liant hydraulique contenant une phase minéralogique de type Alite est majoritairement constitué d'Alite.

Par "majoritairement constitué", on entend être constitué à plus de 50 %, notamment plus de 60 %, préférentiellement plus de 63 % en masse.

Par "phase minéralogique de type aluminate", on désigne toute phase minéralogique résultant de la combinaison d'aluminate (de formule chimique $Al_2O_3$, ou "A" en notation cimentière), avec d'autres espèces minérales.

Plus précisément, ladite phase minéralogique de type aluminate est comprend également de la Mayenite (C12A7), de l'aluminoferrite tétracalcique (C4AF), de l'aluminate tricalcique (C3A), ou une combinaison de plusieurs de ces phases.

Ledit au moins un liant hydraulique contenant une phase minéralogique de type aluminate, est choisi parmi un clinker sulfoalumineux, un clinker sulfo-bélitique, ou un mélange de ces clinkers.

La présente invention peut être mise en oeuvre avec une combinaison de plusieurs liants hydrauliques contenant chacun une phase minéralogique de type aluminate. Toutefois, pour des raisons de simplicité de mise en oeuvre, il est préféré de réaliser la présente invention avec un seul liant hydraulique contenant une phase minéralogique de type aluminate.

De préférence, ledit au moins un liant hydraulique contenant une phase minéralogique de type aluminate est un clinker sulfoalumineux.

Par "sulfoalumineux", on désigne tout matériau résultant de la cuisson à une température comprise entre 900°C et 1350°C de mélanges contenant au moins une source de chaux, au moins une source d'aluminium et au moins une source de sulfate.

Le clinker sulfoalumineux faisant partie du liant de la présente invention renferme une teneur en Yeelimite (de formule chimique $4CaO.3Al_2O_3.SO_3$ ou $C_4A_3\$$ en notation cimentière), supérieure à 30 % en poids, de préférence comprise entre 50 et 70 % en poids.

Par "source de sulfates", on désigne une substance à l'origine de la dissolution d'ions sulfate. Les sources de sulfates les plus évidentes sont les sels de sulfate, le plâtre, des boues ou autres déchets industriels riches en sulfates (par exemple le phosphogypse, le titanogypse). Les sources de sulfates peuvent être utilisées en mélange. Ces produits sont rarement disponibles en quantités industrielles avec une grande pureté, leur coût serait prohibitif. Il convient donc de considérer des mélanges de produits pouvant contenir des impuretés. Dans ce cas, l'homme du métier adaptera les quantités des sources de sulfates en raisonnant sur le nombre de moles de sulfates (exprimée $SO_3$ ou $\$$ en notation cimentière) souhaitées.

Dans la présente invention, la solubilité d'une source de sulfates est assimilée à la solubilité des ions sulfates qu'elle contient. Autrement dit, pour déterminer la solubilité d'une source de sulfates non pure, on considère la solubilité de la principale espèce d'ions sulfates composant cette source.

Préférentiellement, ladite au moins une source de sulfates ayant une solubilité inférieure à 4 g.L$^{-1}$ est choisie parmi le gypse ($CaSO_4.2H_2O$) ou l'anhydrite ($CaSO_4$).

Préférentiellement, ladite au moins une source de sulfates ayant une solubilité supérieure à 4 g.L$^{-1}$ est choisie parmi le sulfate d'aluminium dodéca à octadéca hydraté ($Al_2(SO_4)_3$, 12 à 18 $H_2O$), du sulfate de fer tetra à hepta hydraté ($Fe(SO_4)$, 4 à 7 $H_2O$) du plâtre ($CaSO_4.$ ½ $H_2O$). De manière avantageuse, la source de sulfate de solubilité > 4g/L peut être ajoutée à l'eau de gâchage.

La caractéristique permettant de distinguer les deux sources de sulfates est en réalité la cinétique de dissolution. Mais cette caractéristique est difficile à déterminer *a priori* car elle dépend de multiples paramètres. En fait, elle doit être déterminée expérimentalement pour chaque sulfate considéré en fonction de nombreuses conditions telles que : la température, la salinité du milieu (nature et concentration des ions présents), le pH, etc... D'autres caractéristiques telles que la finesse de broyage de la source de sulfate, et son degré de cristallisation, influent également de manière significatives sur la cinétique de dissolution. Dans la pratique, il est plus aisé de considérer la solubilité des espèces dans l'eau à une température donnée. Ces caractéristiques sont bien connues de l'homme du métier *(CRC Handbook of Chemistry and Physics (92nd edition), William M. Haynes, Editions : CRC Press/Taylor and Francis).

Pertinemment, l'inventeur a observé que la solubilité à 0°C permet d'estimer la cinétique de dissolution d'une espèce sans avoir recours à de longues expérimentations. Des erreurs d'estimation sont possibles mais ce critère a l'avantage d'être simple à mettre en oeuvre et de permettre une première sélection qui pourra être complétée par des tests de cinétique de dissolution précis si nécessaire.

Dans un mode de réalisation particulier, le matériau cimentaire durcissable selon l'invention est caractérisé par une composition de liants hydrauliques comprenant :

de plus de 75 % à moins de 95 % dudit mélange de liants hydrauliques, et
de plus de 5 % à moins de 25 % dudit mélange de sources de sulfates,

lesdites proportions étant exprimées rapport à la masse totale de la composition de liants hydrauliques.

Préférentiellement, le matériau cimentaire durcissable, selon l'invention, est caractérisé par la présence, dans ledit mélange de liants hydrauliques, des phases minéralogiques suivantes : Yeelimite (C4A3$), Mayenite (C12A7), mono aluminate de calcium (CA), Ferrite (C4AF), Belite (C2S), aluminate tricalcique (C3A), et Alite (C3S), lesdites phases minéralogiques ayant, par rapport à la masse totale dudit mélange des liants hydrauliques, les proportions suivantes :

- Yeelimite (C4A3$) et mono aluminate de calcium (CA) : 4 à 47 %, préférentiellement 12 à 35 %
- Mayenite (C12A7): 0 à 4 %, préférentiellement 0 à 2 %
- Ferrite (C4AF): 1 à 16 %, préférentiellement 2 à 14 %
- Belite (C2S) : 5 à 29 %, préférentiellement 6 à 26 %
- Aluminate tricalcique (C3A): 1 à 14 %, préférentiellement 1 à 11 %
- Alite (C3S): 21 à 76 %, préférentiellement 29 à 64 %.

Ces proportions correspondent aux phases minéralogiques présentes dans le mélange de liants hydrauliques ; elles ne tiennent pas compte des au moins deux sources de sulfates.

Plus précisément, la phase minéralogique Belite est composée de Belite sous sa forme β (C2S(β)).

Préférentiellement, le matériau cimentaire durcissable selon l'invention est caractérisé par les proportions suivantes desdites phases minéralogiques, par rapport à la masse totale de ladite composition de liants hydrauliques :

- Yeelimite (C4A3$) et mono aluminate de calcium (CA) : 3 à 40 %, préférentiellement 10 à 30 %
- Mayenite (C12A7): 0 à 3 %, préférentiellement 0 à 2 %
- Ferrite (C4AF): 1,2 à 14 %, préférentiellement 2 à 12 %
- Belite (C2S) : 4 à 25 %, préférentiellement 5 à 22 %
- Aluminate tricalcique (C3A): 1 à 12 %, préférentiellement 1 à 9 %
- Alite (C3S): 18 à 65 %, préférentiellement 25 à 55 %.

Ces proportions correspondent aux phases minéralogiques présentes dans la composition de liants hydrauliques ; elles tiennent compte des sources de sulfates.

Dans un mode de réalisation particulier, le matériau cimentaire durcissable selon l'invention est caractérisé en ce que ladite composition de liants hydrauliques comprend :

- une proportion massique dudit liant hydraulique contenant une phase minéralogique de type Alite supérieure à une valeur : A-D-C, et inférieure à une valeur : C, et
- une proportion massique dudit liant hydraulique contenant une phase minéralogique de type aluminate supérieure à une valeur : A -C, et inférieure à une valeur : D+B, et
- une proportion massique de ladite source de sulfates ayant une solubilité inférieure à 4 g.L$^{-1}$, supérieure à 6 %, et inférieure à une valeur : B, et
- une proportion massique de ladite source de sulfates ayant une solubilité supérieure à 4 g.L$^{-1}$, supérieure à 0 %, et inférieure à une valeur : B,

lesdites proportions massiques étant exprimées en pourcentage par rapport à la masse totale de la composition de liants hydrauliques, et

lesdites valeurs A, B, C et D correspondant aux formules suivantes :

$$A = 100 \times [115,3 / (X_1 + X_2)],$$

$$B = 100 - A,$$

$$C = [100 \times (53,7 - B) / X_1] + B,$$

$$D = 100 - C,$$

dans lesquelles les valeurs $X_1$ et $X_2$ correspondent :

- pour $X_1$ au pourcentage massique de la phase minéralogique Alite dans ledit au moins un liant hydraulique contenant une phase minéralogique de type Alite, et
- pour $X_2$ au pourcentage massique de la somme des phases minéralogiques Yeelimite et monoaluminate de calcium, dans ledit au moins un liant hydraulique contenant une phase minéralogique de type aluminate,

sous réserve que la somme $X_1 + X_2$ soit supérieure à 115,3.

Les quantités de phases minéralogiques présentes au sein d'un liant hydraulique sont des données techniques fournies par le producteur. En cas d'absence de telles données ou de doute sur la teneur exacte, ces valeurs peuvent être déterminées par analyse (DRX, quantification par méthode de Rietveld).

Il a été observé que ce mode de réalisation basé sur des calculs empiriques permet d'ajuster les proportions de chaque constituant de la composition de liants hydrauliques en fonction de la nature exacte des liants hydrauliques contenant respectivement une phase minéralogique de type Alite, et une phase minéralogique de type aluminate, utilisés.

Plus exactement en fonction des teneurs en Alite, Yeelimite et monoaluminate de calcium de ces liants hydrauliques.

Plus particulièrement, le matériau cimentaire durcissable, selon la présente invention, est caractérisé en ce que la proportion massique de ladite source de sulfates ayant une solubilité inférieure à 4 g.L$^{-1}$, est supérieure à 6,5 %, et plus particulièrement est supérieure à 7 %.

De préférence, le matériau cimentaire durcissable selon la présente invention est caractérisé en ce qu'il comprend au moins un adjuvant choisi parmi :

- les plastifiants,
- les superplastifiants notamment les polycarboxylates, les mélamines sulfonates, les poly-naphtalènes sulfonates,
- les retardateurs de prise, par exemple les gluconates, les acides carboxyliques (acide citrique, acide tartrique), l'acide borique, les phosphates alcalins,
- les accélérateurs de prise par exemple les sels, les nitrates, les thiocyanates, les chlorures,
- les accélérateurs de durcissement notamment les carbonates alcalins,
- les entraineurs d'air notamment les laurylsulfates de sodium,
- les agents anti-retrait,
- les agents anti-bullage ou antimousse,
- les imperméabilisants par exemple le stéarate de calcium,
- les agents anti-sédimentation notamment les bentonites, les atapulgites,
- les pigments colorés minéraux ou organiques,
- les latex notamment les copolymères styrène-butadiène ou les vinyle acétate-vinyle versatate ou les vinyles acétate-monomère acrylique, et
- les modificateurs de rhéologie ;
- notamment les polysaccharides modifiés ou non, préférentiellement les gommes diutanes, les gommes xanthane, les gommes gelanes, les gommes welane ; et
- notamment les rétenteurs d'eau, préférentiellement les éthers d'amidons, les éthers de cellulose.

L'adjuvantation du matériau cimentaire durcissable selon la présente invention par une très faible quantité de carbonate alcalin (par exemple environ 1 % de Li$_2$CO$_3$ ou Na$_2$CO$_3$ par rapport à la masse totale de la composition de liant peut être nécessaire lorsque ledit liant hydraulique contenant une phase minéralogique de type Alite s'avère être riche en chaux libre (CaO) et en Portlandite (Ca(OH)$_2$). Par "riche", on entend plus de 1,5% en masse de chaux libre et de Portlandite. Particulièrement, l'adjuvantation en carbonate alcalin peut correspondre à au moins 2% de la masse de chaux libre et de Portlandite, dudit liant hydraulique contenant une phase minéralogique de type Alite.

L'invention concerne également un matériau cimentaire durcissable caractérisé en ce qu'il présente une résistance à la compression à 1 jour supérieure à 14 MPa, et une résistance à 28 jours supérieure à 30 MPa, lorsqu'il est mis en oeuvre à une température comprise entre -10°C et +5 °C.

A titre d'indication un ciment de type Portland CEM II 32,5 a une résistance à la compression, à 1 jour, à +20°C, de l'ordre de 12 ou 13 MPa.

Dans un mode de réalisation préféré, la présente invention a pour objet un matériau cimentaire durcissable caractérisé par une composition de liants hydrauliques comprenant :

- de 62 à 66 % de ciment Portland, ledit ciment Portland comprenant de 60 à 70 % de phase minérale Alite, et
- de 22 à 28 % de ciment sulfoalumineux, ledit ciment sulfoalumineux comprenant de 50 à 72 % d'un mélange des phases minérales Yeelimite et mono aluminate de calcium, et
- de 1,7 à 3 % de sulfate d'aluminium dodéca à octadéca hydraté, et
- de 8,5 à 13 % d'anhydrite.

La présente invention concerne également l'utilisation d'un matériau cimentaire durcissable tel que défini précédemment, pour la mise en oeuvre d'un matériau capable de faire prise par temps froid.

Par "matériau capable de faire prise par temps froid", on désigne notamment les coulis, pâtes de ciment, enduits, mortiers et bétons définis précédemment, sous réserve qu'ils développent par temps froid des résistances comparables à celles que développerait un matériau de même type à base de ciment Portland à +20°C dans les mêmes délais.

Par "temps froid", on entend des températures comprises entre +10°C et -20°C. Ces températures peuvent être liées à la géographie (latitude, altitude), au climat (hiver) ou à des conditions artificielles (chambres froides), cela n'influe en rien sur la présente invention.

Dans un mode de réalisation particulier, la présente invention a pour objet l'utilisation d'un matériau cimentaire durcissable tel que défini précédemment, pour une mise en oeuvre à une température variant de -10°C à +5°C.

En dessous de -10°C il devient difficile de maintenir l'eau de gâche liquide.

Préférentiellement, l'utilisation d'un matériau cimentaire durcissable, selon la présente invention, est caractérisée par une mise en oeuvre avec une eau ne contenant pas de glace.

La présence de particules d'eau solide (glace), n'est pas souhaitable pour la mise en oeuvre des matériaux selon la présente invention. En effet l'eau solide n'est pas mobilisable pour la formation des hydrates nécessaires au développement des résistances, notamment pour l'apparition d'ettringite. L'ettringite (formule $3CaO.Al_2O_3.3CaSO_4$ $32H_2O$) requiert 32 molécules d'eau par maille cristalline. Par ailleurs, en fondant la glace va former des cavités (pores) au sein de la matrice cimentaire, pénalisant les résistances mécaniques du matériau.

Idéalement, la température des différents matériaux (granulats, composition de liants hydrauliques) devrait être supérieure à 0°C pour éviter un effet de post-glaçage (effet 'sorbet') pendant la gâchée, conduisant également à la formation de cristaux de glace pendant la gâchée.

La présente invention a également pour objet l'utilisation d'un matériau cimentaire durcissable tel que défini précédemment, et caractérisée par une cure de maturation réalisée à des températures variant entre -20°C et +10°C.

Par "cure de maturation", on désigne la période pendant laquelle le matériau cimentaire durcissable frais, c'est-à-dire juste après sa gâchée puis sa mise en place, est laissé au repos afin que les hydrates contribuant au développement des résistances se forment. La gamme de températures acceptables pour la cure du matériau est plus large que la gamme de températures acceptables pour sa mise oeuvre (coulée). Ces variations de températures peuvent être liées par exemple aux cycles jour-nuit, à l'ensoleillement, à des variations météorologiques (vague de froid, ou redoux).

De manière surprenante, la température négative minimale, notamment plus basse que lors de la mise en oeuvre, ne pose plus les problèmes de présence de glace dans l'eau de gâche évoqués précédemment. En effet, d'une part, l'eau est rapidement saturée en sels de sulfates (présence de la source de sulfates ayant une solubilité supérieure à 4 $g.L^{-1}$) abaissant ainsi son point de fusion ; et d'autre part l'ettringite apparaissant rapidement, les molécules d'eau nécessaires à sa formation sont déjà intégrées dans l'ettringite et ne sont plus gélives, c'est-à-dire susceptible de geler. L'apparition éventuelle de glace au sein de la matrice cimentaire quelques heures après la mise en oeuvre du matériau est minime, et ne pose donc plus de problèmes particuliers.

Le matériau cimentaire durcissable, selon la présente invention, trouve une utilisation particulièrement intéressante pour la mise en oeuvre d'un béton, d'un mortier, d'un coulis, d'un enduit, ou d'une pâte de ciment.

Matériels et méthodes

Normes

Les contrôles des caractéristiques physico-chimiques et mécaniques des matériaux durcissables ont été réalisés selon la norme Européenne EN 196 paragraphes 1 à 7.

Matériaux utilisés

Les quantités de matériaux utilisées dans les exemples ci-après obéissent à la norme Européenne EN 196-1, en l'occurrence :

- 1350 g de sable normalisé CEN
- 225 g d'eau
- 450 g de la composition de liants hydrauliques.

Tous les essais ont été réalisés à +5°C, selon le protocole suivant :

Méthode : Peser le sable CEN et tous les constituants poudres de la composition de liants hydrauliques, pour préparer au total 1,8 Kg ; les introduire dans un bol de malaxage de 3 litres. Mélanger à sec pendant 1 minute à petite vitesse (140 t/min avec train épicycloïdal (ou planétaire) actionnant la pale de mélange à 1 tour/seconde), couvrir le bol d'un couvercle en plastique étanche, puis conserver cet ensemble 24 heures à +5°C en chambre de réfrigération.

Gâcher cette composition de liants hydrauliques et de sable en ajoutant 225 g d'eau à +5°C, dans le bol contenant la composition mélangée de liants et le sable. Malaxer durant 60 secondes à 140 t/min avec train épicycloïdal (ou planétaire) actionnant la pale de mélange de 1 tour/seconde (petite vitesse), puis malaxer durant 30 s à 280 t/min avec train épicycloïdal de 2 tours/seconde (grande vitesse).

Les tests de caractérisations ont ensuite être réalisés sur ces mortiers.

Les constituants de la composition de liants hydrauliques peuvent être du sulfate d'aluminium ($Al_2(SO_4)_3$ 14 à 16 $H_2O$ (SMA) du sulfate de fer 7 $H_2O$, de l'anhydrite micronisée (sulfate de calcium, Metausel), du clinker sulfoalumineux (Argalum, Guardiareggia, Italie), du ciment Portland de classe CEM I 52,5N CE CP2 NF. Le ciment mis en oeuvre dans les compositions des exemples n°1 à 8 et n°13 à 18 est un ciment produit à l'usine de Couvrot ; dans les compositions des exemples n°9 et 10 un ciment produit à l'usine de Bussac ; dans la composition de l'exemple n°11 un ciment produit à l'usine de Gargenville ; et dans la composition de l'exemple n°12 un ciment produit à l'usine d'Airvault.

Le tableau 1 regroupe les principales phases minéralogiques de ces ciments (% massiques)

Tableau 1

| Usines de production | C3A | C3S | C2S | C4AF | SO3 |
|---|---|---|---|---|---|
| **Airvault** | 4,3 | 61 | 18,2 | 10,8 | 3,4 |
| **Bussac** | 5,5 | 64,3 | 10,8 | 12,1 | 3,2 |
| **Couvrot** | 13,1 | 63,2 | 10,2 | 4,1 | 3,5 |
| **Gargenville** | 6,6 | 66,1 | 10,6 | 10,4 | 3 |

Le sable CEN est un sable naturel, siliceux notamment dans ses fractions les plus fines. Il est propre, les grains sont de forme généralement isométrique et arrondie. Il est séché et criblé (voir sa composition granulométrique dans le tableau 2).

Tableau 2

| Tamis ouverture des mailles (mm) | Refus cumulés (%) |
|---|---|
| 0.08 | 99 $\pm$ 1 |
| 0.16 | 87 $\pm$ 5 |
| 0.50 | 67 $\pm$ 5 |
| 1.00 | 33 $\pm$ 5 |
| 1.60 | 7 $\pm$ 5 |
| 2.00 | 0 |

Analyses chimiques et minéralogiques

Les analyses des différentes compositions chimiques, notamment les différentes déterminations du $SO_3$ des sources de sulfates, ont été réalisées par spectrométrie à fluorescence X (Spectromètre Magix, Panalytical).

Les analyses minéralogiques portant sur les différentes phases des clinkers constituant le mélange de liants hydrauliques, ou du ciment, ont été réalisées par diffraction X (DRX), avec une quantification des phases minéralogiques par la méthode de Rietveld (XPERT PRO, Panalytical, logiciels EVA et TOPAS).

Caractérisations mécaniques

Tests réalisés à +5°C :

Le temps de prise a été mesuré à l'aiguille Vicat pour mortiers selon la norme NF P15-431.

Les tests de résistance à la flexion et à la compression selon la norme EN 196-1, et de densité durcie ont été réalisés sur des éprouvettes de mortier (dimensions : 4 cm x 4 cm x 16 cm).

Les éprouvettes sont réalisées à +°C et conservées dans l'eau à +5°C.

Les mesures de variations dimensionnelles selon la norme NFP 15-433 ont été réalisées sur des éprouvettes conservées dans l'eau à +5°C pour les mesures de gonflement. Les retraits sont mesurés à +5°C, sur des éprouvettes conservées à l'air avec un taux d'humidité relatif de 50 %.

Pour le ciment Portland de référence (échantillon n°1), les retraits ont été mesurés à +20°C, sur des éprouvettes conservées à l'air avec un taux d'humidité relatif de 50 %. Les éprouvettes pour le gonflement ont été conservées dans l'eau à +20°C.

Tests réalisés à -10°C :

# EP 2 935 146 B1

Les tests de résistance à la compression sur éprouvettes 16x32 cm et 4x4x16 cm selon la norme NF EN 12390-4, et de densité durcie, ont été réalisés sur des éprouvettes de mortier.

Les éprouvettes sont réalisées à +5°C, puis conservées dans leurs moules en enceinte climatique à fort courant d'air réglant consigné à 65 % HR et à -10°C.

Résultats

Les résultats obtenus sont présentés dans les tableaux suivants. Afin d'en simplifier la lecture, les termes suivant ont été utilisés :

Clinker S, désigne un liant hydraulique contenant une phase minéralogique de type Alite (C3S),
Clinker A, désigne un liant hydraulique contenant une phase minéralogique de type aluminate
$SO_3$ >4, désigne une source de sulfates ayant une solubilité supérieure à 4 g.L$^{-1}$, à 0°C
$SO_3$ <4, désigne une source de sulfates ayant une solubilité inférieure à 4 g.L$^{-1}$, à 0°C

Les termes clinker S, clinker A, $SO_3$>4, et $SO_3$<4 indiquent les proportions massiques de chacun de ces constituants par rapport à la masse totale de la composition de liants hydrauliques.
La température indique à quelle température les échantillons ont été préparés et les mesures effectuées.
Les début et fin de prise des échantillons sont indiqués en heures (valeurs à fractions décimales).
Les résistances à la compression (Rc) et à la flexion (Rf), sont indiquées en MPa (ou N/mm$^2$), à 1 jour, 7 jours et 28 jours, après la fin du malaxage de l'échantillon.

## EXEMPLES de référence 1 et 2

Les échantillons n°1 et 2 (tableau 3) sont des exemples comparatifs de référence à respectivement +20 et +5°C, ne renfermant que du liant hydraulique contenant une phase minéralogique de type Alite (ciment Portland). Elles servent de point de comparaison pour évaluer les performances des compositions selon la présente invention (voir tableau 3).

## EXEMPLES 3 à 8

Les compositions selon l'invention (échantillons n° 3 à 8) présentées dans le tableau 3 ont donné des échantillons (éprouvettes 4x4x16) présentant une résistance à la compression à 1 jour supérieure à 14 MPa, et une résistance à 28 jours supérieure à 30 MPa, malgré une mise en oeuvre à +5°C.

Tableau 3

| Echantillon | N°1 Réf | N°2 Réf | N°3 | N°4 | N°5 | N°6 | N°7 | N°8 |
|---|---|---|---|---|---|---|---|---|
| Clinker S (%) | 100 | 100 | 63,3 | 65,0 | 65,0 | 65,0 | 60,0 | 63,0 |
| Clinker A (%) | - | - | 24,7 | 23,0 | 24,0 | 23,5 | 28,0 | 25,0 |
| $SO_3$<4 (%) | - | - | 10,0 | 10,0 | 9,0 | 9,5 | 7,0 | 8,0 |
| $SO_3$>4 (%) | - | - | 2,0 | 2,0 | 2,0 | 2,0 | 5,0 | 4,0 |
|  |  |  |  |  |  |  |  |  |
| Température | +20 | +5°C | +5°C | +5°C | +5°C | +5°C | +5°C | +5°C |
|  |  |  |  |  |  |  |  |  |
| Début de prise (h) | 4,10 | 5,90 | 0,79 | 0,80 | 0,80 | 0,80 | 0,81 | 0,80 |
| Fin de prise (h) | 5,00 | 7,72 | 2,00 | 2,17 | 1,83 | 1,97 | 1,40 | 1,25 |
|  |  |  |  |  |  |  |  |  |
| Rf 1 jour | 5,2 | 0,7 | 5,5 | 6,7 | 6,6 | 6,2 | 4,7 | 6,3 |
| Rc 1 jour | 22,5 | 2,0 | 26,1 | 27,3 | 27,1 | 26,0 | 21,4 | 26,8 |
|  |  |  |  |  |  |  |  |  |

(suite)

| Echantillon | N°1 Réf | N°2 Réf | N°3 | N°4 | N°5 | N°6 | N°7 | N°8 |
|---|---|---|---|---|---|---|---|---|
| Rf 7 jours | 8,9 | 6,6 | 6,0 | 7,8 | 7,8 | 7,3 | 5,3 | 6,3 |
| Rc 7 jours | 52,8 | 41,4 | 36,6 | 47,7 | 42,0 | 36,7 | 29,2 | 38,4 |
| | | | | | | | | |
| Rf 28 jours | 8,4 | 8,2 | 6,0 | 9,2 | 7,7 | 7,7 | 6 | 6,1 |
| Rc 28 jours | 55,7 | 55,6 | 47,3 | 57,4 | 50,1 | 51,3 | 41 | 44,2 |

Echantillons n°3, 4, 5 et 6

La source de sulfates ayant une solubilité supérieure à 4 g.L$^{-1}$ utilisée est du sulfate d'aluminium 14-16 H$_2$O, la source de sulfates ayant une solubilité inférieure à 4 g.L$^{-1}$ est de l'anhydrite. On observe que les temps de prise sont courts, et que les résistances développées à 1 jour sont comparables à celles du ciment Portland à +20°C, mais largement supérieures à celles du même ciment Portland à +5°C. Les résistances à 28 jours sont comparables à celles des ciments Portland coulés à +5°C ou +20°C.

Echantillon 7

La source de sulfates ayant une solubilité supérieure à 4 g.L$^{-1}$ utilisée est du sulfate de fer 7 H$_2$O, la source de sulfates ayant une solubilité inférieure à 4 g.L$^{-1}$ est de l'anhydrite. Les résultats sont comparables à ceux des échantillons utilisant du sulfate d'aluminium en tant que source de sulfates ayant une solubilité supérieure à 4 g.L$^{-1}$.

Echantillon 8

La source de sulfates ayant une solubilité supérieure à 4 g.L$^{-1}$ utilisée est une combinaison de sulfates de fer 7 H$_2$O et d'aluminium 14-16 H$_2$O ; cette combinaison est composée à 25 % (en masse) de sulfate de fer 7 H$_2$O, et à 75 % (en masse) de sulfate d'aluminium 14-16 H$_2$O. La source de sulfates ayant une solubilité inférieure à 4 g.L$^{-1}$ est de l'anhydrite. Les résultats sont comparables à ceux des autres échantillons n'utilisant qu'un seul type de source de sulfates ayant une solubilité supérieure à 4 g.L$^{-1}$.

EXEMPLE 6bis

Cet échantillon a été réalisé à la température négative de -10°C :

La composition de l'échantillon est la même que celle utilisée dans l'échantillon n°6.

Un essai à été réalisé au sein d'une enceinte climatique disposant d'un fort flux d'air réglant consigné à 65% HR et -10°C.
Deux éprouvettes cylindriques de dimension 16 x 32 cm ont été confectionnées pour les échéances de 24 heures et de 7 jours, les mesures des résistances à la compression ont donné les résultats suivants :

Résistance à la compression à 24 heures à -10°C : 11,5 MPa
Résistance à la compression à 7 jours à -10°C : 21,5MPa

La même composition a été utilisée avec des éprouvettes 4 x 4 x 16 cm, les mesures des résistances à la compression ont donné les résultats suivants :

Résistance à la compression à 24 heures à -10°C : 8,5 MPa
Résistance à la compression à 7 jours à -10°C : 23,2 MPa

Les résistances obtenues sont plus faibles que celles de l'échantillon conservé à +5°C (échantillon n°6). Cependant elles restent supérieures à celles de l'échantillon de référence à +5°C (échantillon n°2) pour le court terme (24 heures).

**EXEMPLES 9 à 12**

Les compositions présentées dans le tableau 4 (échantillons n°9, 10, 11 et 12) ont donné des échantillons (éprouvettes 4x4x16) présentant les caractéristiques mécaniques souhaitées à court et long terme malgré une mise en oeuvre à +5°C.

Ces échantillons ont été obtenus avec des liants hydrauliques contenant une phase minéralogique de type Alite (ciment Portland) différents, provenant des usines de Bussac (échantillons n°9 et 10), Gargenville (échantillon n°11), et Airvault (échantillon n° 12).

La source de sulfates ayant une solubilité supérieure à 4 g.L$^{-1}$ utilisée est du sulfate d'aluminium 14-16 $H_2O$, la source de sulfates ayant une solubilité inférieure à 4 g.L$^{-1}$ est de l'anhydrite.

Tableau 4

| Echantillon | n°9 | n°10 | n°11 | n°12 |
|---|---|---|---|---|
| CK S (%) | 63,7 | 64,0 | 64,0 | 64,0 |
| CK A (%) | 25,6 | 25,0 | 25,0 | 25,0 |
| $SO_3$ <4 (%) | 8,8 | 9,0 | 9,0 | 9,0 |
| $SO_3$ >4 (%) | 1,9 | 2,0 | 2,0 | 2,0 |
| | | | | |
| Température | +5°C | +5°C | +5°C | +5°C |
| | | | | |
| Début Prise (h) | 0,85 | 0,70 | 1,17 | 1,58 |
| Fin Prise (h) | 1,05 | 0,77 | 1,23 | 1,78 |
| | | | | |
| Rf 1 jour | 5,1 | 6,3 | 6,3 | 5,4 |
| Rc 1 jour | 21,9 | 25,3 | 31,0 | 25,8 |
| | | | | |
| Rf 7 jours | 8,4 | 6,4 | 7,5 | 6,7 |
| Rc 7 jours | 45,7 | 36,8 | 44,4 | 42,9 |
| | | | | |
| Rf 28 jours | 9,0 | 6,0 | 5,6 | 6,1 |
| Rc 28 jours | 59,5 | 46,1 | 47,1 | 49,2 |
| | | | | |
| Retrait 28 jours ($\mu$m/m) | - | - | -243 | -300 |

Les résultats présentés dans le tableau 4, prouvent l'adaptabilité de la présente invention à des ciments d'origines différentes.

Les proportions de mélange de liants hydrauliques par rapport au mélange de sources de sulfates varient un peu, entre les échantillons n°9 et 10. Les quatre échantillons présentent des résistances satisfaisantes au sens de la présente invention : une résistance à la compression à 1 jour supérieure à 14 MPa, et une résistance à 28 jours supérieure à 30 MPa, malgré une mise en oeuvre à +5°C.

**Exemples comparatifs 13 à 18 (échantillons 13 à 18)**

Les compositions présentées dans le tableau 5 ont donné des échantillons ne présentant pas les caractéristiques mécaniques souhaitées à court et long terme (à savoir une résistance à la compression à 1 jour supérieure à 14 MPa, et une résistance à 28 jours supérieure à 30 MPa, malgré une mise en oeuvre à +5°C).

Tableau 5

| Echantillon | N°13 | N°14 | N°15 | N°16 | N°17 | N°18 |
|---|---|---|---|---|---|---|
| Clinker S (%) | 67,0 | 61,0 | 70,0 | 50,0 | 83,0 | 87,0 |
| Clinker A (%) | 31,0 | 29,0 | 25,0 | 25,0 | - | - |
| SO$_3$<4 (%) | - | 10,0 | 2,6 | 23,5 | 14,0 | 9,0 |
| SO$_3$>4 (%) | 2,0 | - | 2,4 | 1,5 | 3,0 | 4,0 |
| | | | | | | |
| Température | +5°C | +5°C | +5°C | +5°C | +5°C | +5°C |
| | | | | | | |
| Début Prise (h) | 0,53 | 0,75 | 0,75 | 0,80 | 1,80 | 1,30 |
| Fin Prise (h) | 1,52 | 2,50 | 1,33 | 1,65 | 3,00 | 2,75 |
| | | | | | | |
| Rf 1 jour | 3,0 | 0,9 | 3,9 | 2,1 | 1,4 | 1,2 |
| Rc 1 jour | 9,4 | 3,4 | 13,4 | 8,2 | 4,3 | 4,5 |
| | | | | | | |
| Rf 7 jours | 5,1 | 5,8 | 5,1 | - | 4,4 | 4,4 |
| Rc 7 jours | 35,2 | 36,5 | 21,2 | - | 23,9 | 25,2 |
| | | | | | | |
| Rf 28 jours | 5,0 | 8,1 | 4,7 | - | 5,7 | 6,3 |
| Rc 28 jours | 35,1 | 48,8 | 35,4 | - | 32,1 | 35,5 |

Echantillons 13 et 14

L'un des deux types de sources de sulfates est omis dans la composition de chacun de ces échantillons. La source de sulfates ayant une solubilité supérieure à 4 g.L$^{-1}$ n'est pas présente dans la composition de l'échantillon n°14, et la source de sulfates ayant une solubilité inférieure à 4 g.L$^{-1}$ n'est pas présente dans la composition de l'échantillon n°13. On observe des résistances à court terme faibles, particulièrement dans le cas de l'échantillon n°14. On observe également une résistance à long terme faible, particulièrement dans le cas de l'échantillon n°13. Ces compositions ne permettent pas d'obtenir des échantillons répondant au problème technique posé. L'utilisation des deux types de sources de sulfate, supérieure et inférieure à 4 g.L$^{-1}$, est nécessaire.

Echantillon 15

La proportion du mélange de liants (95%) par rapport au mélange de sources de sulfates (5 %) est élevée. Les résistances développées aux différents âges (1, 7 et 28 jours) ne permettent pas de répondre aux exigences à court et long terme.

Echantillon 16La proportion du mélange de liants (75 %) par rapport au mélange de sources de sulfates (25 %) est faible. elle se situe à la limite inférieure exclue de la présente invention. Les résistances développées aux différents âges (1, 7 et 28 jours) sont très mauvaises voire inexistantes. De par son excès de sulfates, notamment de source de sulfates ayant une solubilité inférieure à 4 g.L$^{-1}$, cet échantillon présente un gonflement destructif après durcissement (le volume de l'échantillon est doublé, toute la structure est brisée et friable). Ce type de composition est totalement inutilisable.

Echantillons 17 et 18

Le liant hydraulique contenant une phase minéralogique de type aluminate est omis dans la composition de chacun de ces échantillons. Différentes proportions de liant hydraulique contenant une phase minéralogique de type Alite et de mélange de sources de sulfates ont été testées afin de vérifier que les résistances à 1 jour ne sont pas dues à la présence d'une source de sulfates ayant une solubilité supérieure à 4 g.L$^{-1}$. Les résistances à 1 jour observées sont légèrement supérieures à celle du ciment Portland de référence, mais elles restent faibles et ne permettent pas d'apporter une solution au problème technique. La présence du liant hydraulique contenant une phase minéralogique de type aluminate est nécessaire.

**Revendications**

1. Matériau cimentaire durcissable en présence d'eau comprenant une composition de liants hydrauliques renfermant un mélange de liants hydrauliques et un mélange de sources de sulfates,
   **caractérisé en ce que** ledit mélange de liants hydrauliques comprend

   - au moins un liant hydraulique contenant une phase minéralogique de type Alite, et
   - au moins un liant hydraulique contenant une phase minéralogique de type aluminate, majoritairement constitué de Yeelimite (C4A3$) ou d'un mélange de Yeelimite et de mono-aluminate de calcium (CA)

   ledit mélange de sources de sulfates comprenant

   - au moins une source de sulfates ayant une solubilité inférieure à 4 g.L$^{-1}$, et
   - au moins une source de sulfates ayant une solubilité supérieure à 4 g.L$^{-1}$,

   ledit matériau cimentaire comprenant en plus de ladite composition de liants hydrauliques, éventuellement des additions minérales, éventuellement des granulats fins, éventuellement de gros granulats, et éventuellement des adjuvants.

2. Matériau cimentaire durcissable selon la revendication 1,
   **caractérisé en ce que** ledit au moins un liant hydraulique contenant une phase minéralogique de type Alite, est un clinker de type Portland ou un ciment de type Portland.

3. Matériau cimentaire durcissable selon la revendication 1 ou 2,
   **caractérisé en ce que** ledit au moins un liant hydraulique contenant une phase minéralogique de type aluminate, est choisi parmi un clinker sulfoalumineux, un clinker sulfo-bélitique, ou un mélange de ces clinkers.

4. Matériau cimentaire durcissable selon l'une quelconque des revendications précédentes,
   **caractérisé en ce que** ladite phase minéralogique de type aluminate comprend également de la Mayenite (C12A7), de l'aluminoferrite tétracalcique (C4AF), de l'aluminate tricalcique (C3A), ou une combinaison de plusieurs de ces phases.

5. Matériau cimentaire durcissable selon l'une quelconque des revendications précédentes,
   **caractérisé en ce que** ladite au moins une source de sulfates ayant une solubilité inférieure à 4 g.L$^{-1}$ est choisie parmi le gypse (CaSO$_4$.2H$_2$O) ou l'anhydrite (CaSO$_4$).

6. Matériau cimentaire durcissable selon l'une quelconque des revendications précédentes,
   **caractérisé en ce que** ladite au moins une source de sulfates ayant une solubilité supérieure à 4 g.L$^{-1}$ est choisie parmi le sulfate d'aluminium dodéca à octadéca hydraté (Al$_2$(SO$_4$)$_3$, 12 à 18 H$_2$O), du sulfate de fer tetra à hepta hydraté (Fe(SO$_4$), 4 à 7 H$_2$O) du plâtre (CaSO$_4$. ½ H$_2$O).

7. Matériau cimentaire durcissable selon l'une quelconque des revendications précédentes,
   **caractérisé par** une composition de liants hydrauliques comprenant :

   de plus de 75 % à moins de 95 % dudit mélange de liants hydrauliques, et
   de plus de 5 % à moins de 25 % dudit mélange de sources de sulfates,

   lesdites proportions étant exprimées par rapport à la masse totale de la composition de liants hydrauliques.

8. Matériau cimentaire durcissable selon l'une quelconque des revendications précédentes,
   **caractérisé par** la présence, dans ledit mélange de liants hydrauliques, des phases minéralogiques suivantes : Yeelimite (C4A3$), Mayenite (C12A7), mono aluminate de calcium (CA), Ferrite (C4AF), Belite (C2S), aluminate tricalcique (C3A), et Alite (C3S), lesdites phases minéralogiques ayant, par rapport à la masse totale dudit mélange de liants hydrauliques, les proportions suivantes :

- Yeelimite (C4A3$) et mono aluminate de calcium (CA) : 4 à 47 %, préférentiellement 12 à 35 %
- Mayenite (C12A7): 0 à 4 %, préférentiellement 0 à 2 %
- Ferrite (C4AF): 1 à 16 %, préférentiellement 2 à 14 %
- Belite (C2S) : 5 à 29 %, préférentiellement 6 à 26 %
- Aluminate tricalcique (C3A): 1 à 14 %, préférentiellement 1 à 11 %
- Alite (C3S): 21 à 76 %, préférentiellement 29 à 64 %.

9. Matériau cimentaire durcissable selon l'une quelconque des revendications 1 à 8, **caractérisé en ce que** ladite composition de liants hydrauliques comprend :

- une proportion massique dudit liant hydraulique contenant une phase minéralogique de type Alite supérieure à une valeur : A-D-C, et inférieure à une valeur : C, et
- une proportion massique dudit liant hydraulique contenant une phase minéralogique de type aluminate supérieure à une valeur : A -C, et inférieure à une valeur : D+B, et
- une proportion massique de ladite source de sulfates ayant une solubilité inférieure à 4 g.L$^{-1}$ supérieure à 6 %, et inférieure à une valeur : B, et
- une proportion massique de ladite source de sulfates ayant une solubilité supérieure à 4 g.L$^{-1}$ supérieure à 0 %, et inférieure à une valeur : B,

lesdites proportions massiques étant exprimées en pourcentage par rapport à la masse totale de la composition de liants hydrauliques, et

lesdites valeurs A, B, C et D correspondant aux formules suivantes :

$$A = 100 \times [115,3 \, / \, (X_1 + X_2)],$$

$$B = 100 - A,$$

$$C = [100 \times (53,7 - B) \, / \, X_1] + B,$$

$$D = 100 - C,$$

dans lesquelles les valeurs $X_1$ et $X_2$ correspondent :

- pour $X_1$ au pourcentage massique de la phase minéralogique Alite dans ledit au moins un liant hydraulique contenant une phase minéralogique de type Alite, et
- pour $X_2$ au pourcentage massique de la somme des phases minéralogiques Yeelimite et monoaluminate de calcium, dans ledit au moins un liant hydraulique contenant une phase minéralogique de type aluminate,

sous réserve que la somme $X_1 + X_2$ soit supérieure à 115,3.

10. Matériau cimentaire durcissable selon l'une quelconque des revendications précédentes, **caractérisé en ce qu'**il comprend au moins un adjuvant choisi parmi :

les plastifiants, les superplastifiants, les retardateurs de prise, les accélérateurs de prise, les accélérateurs de durcissement, les entraineurs d'air, les agents anti-retrait,
les agents anti-bullage ou antimousse, les imperméabilisants, les agents anti-sédimentation, les pigments colorés, les latex, et les modificateurs de rhéologie ;
notamment les polysaccharides modifiés ou non, préférentiellement les gommes diutanes, les gommes xanthane, les gommes gelanes, les gommes welane ; et
notamment les rétenteurs d'eau, préférentiellement les éthers d'amidons, les éthers de cellulose.

**11.** Matériau cimentaire durcissable selon l'une quelconque des revendications précédentes, **caractérisé en ce qu'**il présente une résistance à la compression à 1 jour supérieure à 14 MPa, et une résistance à 28 jours supérieure à 30 MPa, lorsqu'il est mis en oeuvre à une température comprise entre -10°C et +5 °C.

**12.** Matériau cimentaire durcissable selon l'une quelconque des revendications précédentes, **caractérisé par** une composition de liants hydrauliques comprenant :

- de 62 à 66 % de ciment Portland, ledit ciment Portland comprenant de 60 à 70 % de phase minérale Alite, et
- de 22 à 28 % de ciment sulfoalumineux, ledit ciment sulfoalumineux comprenant de 50 à 72 % d'un mélange des phases minérales Yeelimite et mono aluminate de calcium, et
- de 1,7 à 3 % de sulfate d'aluminium dodéca à octadéca hydraté, et
- de 8,5 à 13 % d'anhydrite.

**13.** Utilisation d'un matériau cimentaire durcissable tel que défini dans l'une quelconque des revendications précédentes, pour la mise en oeuvre d'un matériau capable de faire prise par temps froid.

**14.** Utilisation d'un matériau cimentaire durcissable selon la revendication 13, **caractérisée par** une mise en oeuvre à une température variant de -10°C à +5°C.

**15.** Utilisation d'un matériau cimentaire durcissable selon la revendication 13 ou 14, pour la mise en oeuvre d'un béton, d'un mortier, d'un coulis, d'un enduit, ou d'une pâte de ciment.

**Patentansprüche**

**1.** Härtbares Zementmaterial bei Anwesenheit von Wasser, umfassend eine Zusammensetzung hydraulischer Bindemittel, ein Gemisch hydraulischer Bindemittel und ein Gemisch von Sulfatquellen einschließend, **dadurch gekennzeichnet, dass** das Gemisch hydraulischer Bindemittel umfasst:

- mindestens ein hydraulisches Bindemittel, dass eine mineralogische Phase vom Typ Alit enthält, und
- mindestens ein hydraulisches Bindemittel, dass eine mineralogische Phase vom Typ Aluminat enthält, mehrheitlich gebildet von Yeelimit (C4A3$), oder einem Gemisch aus Yeelimit und Kalzium-Monoaluminat (CA),

wobei das Sulfatquellengemisch umfasst:

- mindestens eine Sulfatquelle mit einer Löslichkeit unter 4 g.L$^{-1}$, und
- mindestens eine Sulfatquelle mit einer Löslichkeit über 4 g.L$^{-1}$,

wobei das Zementmaterial zusätzlich zu der Zusammensetzung hydraulischer Bindemittel eventuell mineralische Zuschläge, eventuell feine Granulate, eventuell grobe Granulate und eventuell Zusätze umfasst.

**2.** Härtbares Zementmaterial nach Anspruch 1, **dadurch gekennzeichnet, dass** das mindestens eine hydraulische Bindemittel, das eine mineralogische Phase vom Typ Alit enthält, ein Klinker vom Typ Portland oder ein Zement vom Typ Portland ist.

**3.** Härtbares Zementmaterial nach Anspruch 1 oder 2, **dadurch gekennzeichnet, dass** das mindestens eine hydraulische Bindemittel, das eine mineralogische Phase vom Typ Aluminat enthält, aus einem Sulfo-Aluminat-Klinker, einem Sulfo-Belit-Klinker oder einem Gemisch dieser Klinker ausgewählt ist.

**4.** Härtbares Zementmaterial nach einem der vorangehenden Ansprüche, **dadurch gekennzeichnet, dass** die mineralogische Phase vom Typ Aluminat ebenfalls Mayenit (C12A7), Tetracalciumaluminatferrit (C4AF), Tricalciumaluminat (C3A) oder eine Kombination mehrerer dieser Phasen umfasst.

**5.** Härtbares Zementmaterial nach einem der vorangehenden Ansprüche, **dadurch gekennzeichnet, dass** die mindestens eine Sulfatquelle, die eine Löslichkeit unter 4 g. L$^{-1}$ hat, aus dem Gips (CaSO$_4$.2H$_2$0) oder dem Anhydrit (CaS0$_4$) ausgewählt ist.

**6.** Härtbares Zementmaterial nach einem der vorangehenden Ansprüche, **dadurch gekennzeichnet, dass** die mindestens eine Sulfatquelle, die eine Löslichkeit über 4 g. L$^{-1}$ hat, aus dem wasserhaltigen Dodeka- bis Oktadeka-Aluminiumsulfat ($Al_2(SO_4)_3$, 12 bis 18 $H_2O$), dem wasserhaltigen Tetra- bis Hepta-Eisensulfat ($Fe(SO_4)$, 4 bis 7 $H_2O$), dem Gips ($CaSO_4. \frac{1}{2} H_2O$) ausgewählt ist.

**7.** Härtbares Zementmaterial nach einem der vorangehenden Ansprüche, durch eine Zusammensetzung hydraulischer Bindemittel gekennzeichnet, umfassend:

> von über 75 % bis unter 95 % des Gemischs hydraulischer Bindemittel, und
> von über 5 % bis unter 25 % des Sulfatquellengemischs,
> wobei die Anteile im Bezug auf die Gesamtmasse der Zusammensetzung hydraulischer Bindemittel ausgedrückt sind.

**8.** Härtbares Zementmaterial nach einem der vorangehenden Ansprüche, durch die Anwesenheit in dem Gemisch hydraulischer Bindemittel der folgenden mineralogischen Phasen gekennzeichnet: Yeelimit (C4A3$), Mayenit (C12A7), Calciummonoaluminat (CA), Ferrit (C4AF), Belit (C2S), Tricalciumaluminat (C3A) und Alit (C3S), wobei die mineralogischen Phasen in Bezug auf die Gesamtmasse des hydraulischen Bindemittelgemischs die folgenden Anteile haben:

> - Yeelimit (C4A3$) und Calciummonoaluminat (CA): 4 bis 47 %, vorzugsweise 12 bis 35 %,
> - Mayenit (C12A7): 0 bis 4 %, vorzugsweise 0 bis 2 %,
> - Ferrit (C4AF): 1 bis 16 %, vorzugsweise 2 bis 14 %,
> - Belit (C2S): 5 bis 29 %, vorzugsweise 6 bis 26 %,
> - Tricalciumaluminat (C3A): 1 bis 14 %, vorzugsweise 1 bis 11 %,
> - Alit (C3S): 21 bis 76 %, vorzugsweise 29 bis 64 %.

**9.** Härtbares Zementmaterial nach einem der Ansprüche 1 bis 8, **dadurch gekennzeichnet, dass** die Zusammensetzung hydraulischer Bindemittel umfasst:

> - einen Massenanteil des hydraulischen Bindemittels, das eine mineralogische Phase vom Typ Alit über einem Wert A-D-C und unter einem Wert C enthält, und
> - einen Massenanteil des hydraulischen Bindemittels, das eine mineralogische Phase vom Typ Aluminat über einem Wert A -C und unter einem Wert D+B enthält, und
> - einen Massenanteil der Sulfatquelle, die eine Löslichkeit unter 4 g.L$^{-1}$ über 6 % und unter einem Wert B hat und
> - einen Massenanteil der Sulfatquelle, die eine Löslichkeit über 4 g.L$^{-1}$ über 0 % und unter einem Wert B hat,

wobei die Massenanteile in Prozent in Bezug auf die Gesamtmasse der Zusammensetzung hydraulischer Bindemittel ausgedrückt sind und
die Werte A, B, C und D den folgenden Formeln entsprechen:

$$A = 100 \times [115,3 / (X_1 + X_2)],$$

$$B = 100 - A,$$

$$C = [100 \times (53,7 - B) / X_1] + B,$$

$$D = 100 - C,$$

wobei die Werte $X_1$ und $X_2$ entsprechen:

> - für $X_1$ dem Massenanteil der mineralogische Phase Alit in dem mindestens einen hydraulischen Bindemittel, das eine mineralogische Phase vom Typ Alit enthält, und
> - für $X_2$ dem Massenanteil der Summe der mineralogischen Phasen Yeelimit und Calciummonoaluminat in dem mindestens einen hydraulischen Bindemittel, das eine mineralogische Phase vom Typ Aluminat enthält,

vorbehaltlich dessen, dass die Summe $X_1 + X_2$ über 115,3 ist.

**10.** Härtbares Zementmaterial nach einem der vorangehenden Ansprüche, **dadurch gekennzeichnet, dass** sie mindestens ein Zusatz umfasst, der ausgewählt ist aus:

den Weichmachern, den Superweichmachern, den Abbindungsverzögerern, den Abbindungsbeschleunigern, den Härtungsbeschleunigern, den Luftporenbildnern, den Anti-Schrumpfungs-Mitteln, den Anti-Blasenbildungs- oder Anti-Schaum-Mitteln, den Wasserdichtigkeitsmitteln, den Anti-Sedimentierungsmitteln, den Farbpigmenten, den Latexen und den Rheologiemodifizierern; vor allem den modifizierten oder nicht modifizierten Polysacchariden, vorzugsweise den Diutanen, den Xanthanen, den Gellanen, den Wellanen; und vor allem den Wasserretentionsmitteln, vorzugsweise den Stärkeethern, den Celluloseethern.

**11.** Härtbares Zementmaterial nach einem der vorangehenden Ansprüche, **dadurch gekennzeichnet, dass** es bei einem 1 Tag eine Kompressionsresistenz über 14 MPa und eine Resistenz über 30 MPa bei 28 Tagen aufweist, wenn es bei einer Temperatur zwischen -10 °C und +5 °C inklusive umgesetzt wird.

**12.** Härtbares Zementmaterial nach einem der vorangehenden Ansprüche, **gekennzeichnet durch** eine Zusammensetzung hydraulischer Bindemittel, umfassend:

- 62 bis 66 % Portland-Zement, wobei der Portland-Zement 60 bis 70 % mineralische Alit-Phase umfasst, und
- 22 bis 28 % Sulfo-Aluminat-Zement, wobei der Sulfo-Aluminat-Zement 50 bis 72 % eines Gemischs der mineralischen Yeelimit- und Calciummonoaluminatphasen umfasst, und
- 1,7 bis 3 % wasserhaltiges Dodeka- bis Oktadeka-Aluminiumsulfat und
- 8,5 bis 13 % Anhydrit.

**13.** Verwendung eines härtbaren Zementmaterials nach einem der vorangehenden Ansprüche für die Umsetzung eines Materials, das imstande ist, auch in der kalten Zeit abzubinden.

**14.** Verwendung eines härtbaren Zementmaterials nach Anspruch 13, **gekennzeichnet durch** die Umsetzung bei einer Temperatur, die von -10 °C bis +5 °C schwankt.

**15.** Verwendung eines härtbaren Zementmaterials nach Anspruch 13 oder 14 für die Umsetzung eines Betons, eines Mörtels, einer Brühe, einer Beschichtung oder eines Zementbreis.

**Claims**

**1.** A cementitious material curable in the presence of water comprising a composition of hydraulic binders containing a mixture of hydraulic binders and a mixture of sulfate sources, **characterized in that** said mixture of hydraulic binders comprises:

• at least one hydraulic binder containing a mineralogical phase of Alite type, and
• at least one hydraulic binder containing a mineralogical phase of aluminate type mostly composed of Yeelimite (C4A3$) or a mixture of Yeelimite and calcium mono-aluminate (CA)

said mixture of sulfate sources comprising:

- at least one sulfate source having solubility lower than 4 g.L$^{-1}$; and
- at least one sulfate source having solubility higher than 4 g.L$^{-1}$,

said cementitious material in addition to said composition of hydraulic binders, also optionally comprising mineral additions, optionally fine granulates, optionally coarse granulates and optionally adjuvants.

**2.** The curable cementitious material according to claim 1, **characterized in that** said at least one hydraulic binder containing a mineralogical phase of Alite type is a clinker of Portland type or cement of Portland type.

3. The curable cementitious material according to claim 1 or 2,
**characterized in that** said at least one hydraulic binder containing a mineralogical phase of aluminate type is selected from among a sulfoaluminous clinker, sulfo-belitic clinker or a mixture of these clinkers.

4. The curable cementitious material according to any of the preceding claims,
**characterized in that** said mineralogical phase of aluminate type also comprises Mayenite (C12A7), tetracalcium aluminoferrite (C4AF), tricalcium aluminate (C3A) or a combination of several of these phases.

5. The curable cementitious material according to any of the preceding claims,
**characterized in that** said at least one sulfate source having solubility lower than 4 $g.L^{-1}$ is selected from among gypsum ($CaSO_4.2H_20$) or anhydrite ($CaSO_4$) .

6. The curable cementitious material according to any of the preceding claims,
**characterized in that** said at least one sulfate source having solubility higher than 4 $g.L^{-1}$ is selected from among aluminium sulfate dodecahydrate to octadecahydrate ($Al_2(SO_4)_3$, 12 to 18 $H_20$), iron sulfate tetrahydrate to heptahydrate ($Fe(SO_4)$, 4 to 7 $H_2O$) , plaster ($CaSO_4$, ½ $H_2O$).

7. The curable cementitious material according to any of the preceding claims,
**characterized by** a composition of hydraulic binders comprising:

more than 75 % to less than 95 % of said mixture of hydraulic binders, and
more than 5 % to less than 25 % of said mixture of sulfate sources,

said proportions being expressed relative to the total weight of the composition of hydraulic binders.

8. The curable cementitious material according to any of the preceding claims,
**characterized by** the presence in said mixture of hydraulic binders, of the following mineralogical phases: Yeelimite (C4A3$), Mayenite (C12A7), calcium monoaluminate (CA), Ferrite (C4AF), Belite (C2S), tricalcium aluminate (C3A) and Alite (C3S),
said mineralogical phases, relative to the total weight of said mixture of hydraulic binders, having the following proportions:

- Yeelimite (C4A3$) and calcium monoaluminate (CA):

from 4 to 47 %, preferably 12 to 35 %;

- Mayenite (C12A7): 0 to 4 %, preferably 0 to 2 %;
- Ferrite (C4AF): 1 to 16 %, preferably 2 to 14 %;
- Belite (C2S): 5 to 29 %, preferably 6 to 26 %
- Tricalcium aluminate (C3A): 1 to 14 %, preferably 1 to 11 %;
- Alite (C3S): 21 to 76 %, preferably 29 to 64 %.

9. The curable cementitious material according to any of claims 1 to 8, **characterized in that** said composition of hydraulic binders comprises:

- a weight proportion of said hydraulic binder containing a mineralogical phase of Alite type higher than a value: A-D-C and lower than a value: C; and
- a weight proportion of said hydraulic binder containing a mineralogical phase of aluminate type higher than a value: A-C and lower than a value: D+B; and
- a weight proportion of said sulfate source, having solubility lower than 4 $g.L^{-1}$, higher than 6 % and lower than a value: B; and
- a weight proportion of said sulfate source, having solubility higher than 4 $g.L^{-1}$, higher than 0 % and lower than a value: B,

said weight proportions being expressed as a percentage relative to the total weight of the composition of hydraulic binders, and

said values A, B, C and D corresponding to the following formulas:

$$A = 100 \times (115.3/(X_1 + X_2)],$$

$$B = 100 - A,$$

$$C = [100 \times (53.7 - B)/X_1] + B,$$

$$D = 100 - C,$$

wherein the values $X_1$ and $X_2$ correspond:

- for $X_1$ to the weight percentage of Alite mineralogical phase in said at least one hydraulic binder containing a mineralogical phase of Alite type, and
- for $X_2$ to the weight percentage of the sum of the Yeelimite and calcium monoaluminate mineralogical phases, in said at least one hydraulic binder containing a mineralogical phase of aluminate type,

provided that the sum $X_1 + X_2$ is higher than 115.3.

10. The curable cementitious material according to any of the preceding claims,
**characterized in that** it comprises at least one adjuvant selected from among:

plasticizers, superplasticizers, setting retarders, setting accelerators, curing accelerators, air-entraining agents, anti-shrinkage agents, anti-bubbling or antifoaming agents, impermeabilizers, anti-sedimentation agents, coloured pigments, latex, and rheology modifiers; in particular polysaccharides whether or not modified, preferably diutan gums, xanthan gums, gellan gums, welan gums; and in particular water retainers, preferably starch ethers, cellulose ethers.

11. The curable cementitious material according to any of the preceding claims,
**characterized in that** it has a compressive strength at 1 day higher than 14 MPa and a strength at 28 days higher than 30 MPa when used at a temperature of between -10 °C and +5 °C.

12. The curable cementitious material according to any of the preceding claims,
**characterized by** a composition of hydraulic binders comprising

- 62 to 66 % Portland cement, said Portland cement comprising 60 to 70 % Alite mineral phase, and
- 22 to 28 % sulfoaluminous cement, said sulfoaluminous cement comprising:

50 to 72 % of a mixture of Yeelimite and calcium monoaluminate mineral phases, and

- 1.7 to 3 % aluminium sulfate dodecahydrate to octadecahydrate, and
- 8.5 to 13 % anhydrite.

13. The use of a curable cementitious material such as defined in any of the preceding claims for application of material capable of setting in cold weather.

14. The use of a curable cementitious material according to claim 13,
**characterized by** application at a temperature varying from - 10°C to +5°C.

15. The use of a curable cementitious material according to claim 13 or 14 for application of a concrete, mortar, slurry, plaster, or cement paste.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0353062 A
- EP 0439372 A
- WO 2002098622 A
- WO 2002098815 A

**Littérature non-brevet citée dans la description**

- CRC Handbook of Chemistry and Physics. CRC Press/Taylor and Francis